# EUROPEAN PATENT SPECIFICATION

(11) **EP 1 459 914 B1**
(45) Date of publication and mention of the grant of the patent: **08.06.2011**
(21) Application number: 04075822.9
(22) Date of filing: 12.03.2004
(51) Int. Cl.: B60G 11/12, B60G 7/02, B60G 11/46

(54) **Securing of a bearing bracket of an axle assembly to a vehicle chassis**
Befestigen eines Lagerbockes für eine Achseinheit an einem Fahrzeugrahmen
Fixation d'un support de palier d'un ensemble-essieu au châssis d'un véhicule

(30) Priority: 17.03.2003 NL 1022948
(43) Date of publication of application: 22.09.2004
(73) Proprietor: VDL Weweler B.V., 7332 AP Apeldoorn (NL)
(72) Inventor: Aalderink, Derk Geert, 7245 NV Laren (NL)
(74) Representative: Brookhuis, Hendrik Jan Arnold

(56) References cited:
- EP-A- 0 325 002
- EP-A- 0 995 664
- EP-A- 1 284 208
- US-A- 2 901 240
- US-A1- 2002 130 480
- PATENT ABSTRACTS OF JAPAN vol. 018, no. 682 (M-1729), 22 December 1994 (1994-12-22) -& JP 06 270625 A (NISSAN SHATAI CO LTD), 27 September 1994 (1994-09-27)

## Description

The invention relates to a securing of a bearing bracket of an axle assembly to a vehicle chassis.

Numerous embodiments of a bearing bracket of this type, which is also known as a spring carrier arm, are known. The bearing bracket is often secured to the chassis by securing the side plates to one another and to the chassis beam with clamping force at the top side of the bearing bracket by means of ten or more bolted connections. This large number of bolted connections is undesirable.

NL 1018772 shows a securing in which the securing regions of separate side plates of the bearing bracket are secured to one another and to a vertical surface of a chassis beam by means of bolts. The securing strip has a part which is clamped between the side plates of the securing bracket. One of the side plates is clamped between the vertical surface of the chassis beam and the securing strip. The securing strip has end regions which are connected to the vertical surface of the chassis beam.

In practice, bearing brackets in which the side plates are not connected to one another at the top side are often also used. These bearing brackets generally involve direct welding to a chassis beam. It is desirable for this welding of the bearing bracket to be carried out while the chassis is being welded together, since a protective layer is then applied to the chassis, and this protective layer would otherwise be damaged by the bearing bracket subsequently being welded in place. One drawback of the welded brackets is that the chassis is less easy to stack for transport, since the bearing brackets project at the underside.

Furthermore, there are numerous available designs of the bearing bracket. When the bearing bracket is being welded to the chassis, the drawback arises that the design of the bearing bracket which is welded to the chassis determines the specific design of the chassis. In principle, therefore, there is a specific chassis for each type of bearing bracket, with the result that there is less freedom of choice during subsequent assembly of the vehicle, and the vehicle manufacturer therefore has less flexibility.

It is an object of the invention to provide an improved securing for a bearing bracket.

This object is achieved by a securing in accordance with claim 1.

One advantage is that the securing according to the invention can be used for bearing brackets with two side plates which do not have to be clamped together.

Preferred embodiments of the securing according to the invention are given in the subclaims.

The invention will be explained in more detail with reference to the drawing, in which:
Fig. 1 diagrammatically depicts a wheel axle suspension of an axle set of a vehicle,
Fig. 2 shows a perspective view, obliquely from below, of a chassis beam with securing strips of the wheel axle suspension shown in Fig. 1,
Fig. 3 shows the chassis beam from Fig. 2 with a bearing bracket secured to it in accordance with the invention,
Fig. 4 diagrammatically depicts a wheel axle suspension of an axle set of a vehicle provided with a shock absorber,
Fig. 5 shows a perspective view, obliquely from below, of a chassis beam with securing strips of the wheel axle suspension shown in Fig. 4,
Fig. 6 shows the chassis beam from Fig. 5 with a bearing bracket secured to it in accordance with the invention,
Fig. 7 shows a sectional view from below of a chassis beam with a bearing bracket fitted to it in a different way in accordance with the invention.

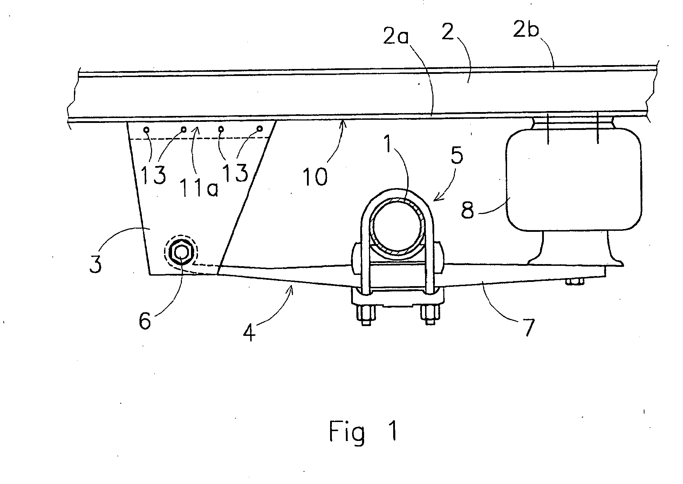

Fig. 1 diagrammatically depicts a wheel axle suspension of an axle set of a vehicle. The wheel axle is denoted by reference numeral 1. The wheel axle 1, which has one or more wheels fitted to both its ends, is illustrated as a round hollow axle, but may also be an axle with a square or other shape of cross section.

The wheel axle suspension comprises a bearing bracket 3 which is secured to a chassis component, in this case a chassis beam 2. The chassis beam 2 is in this example designed as an I profiled section with a bottom flange 2a and a top flange 2b, the bearing bracket 3 being fitted to the bottom surface 10 of the bottom flange 2a.

The wheel axle suspension furthermore comprises a carrier arm 4, which is pivotably secured to the bearing bracket 3, for the wheel axle 1. The carrier arm 4 extends in the longitudinal direction of the vehicle. The wheel axle is secured to the carrier arm 4 in a known way by means of a clamp 5.

The carrier arm 4 is secured to the bearing bracket 3 by a securing bolt 6. In the embodiment illustrated, an end section 7 of the bearing arm 4 extends beyond the wheel axle 1. A gas spring 8 is arranged between the end section 7 and the chassis beam 2.

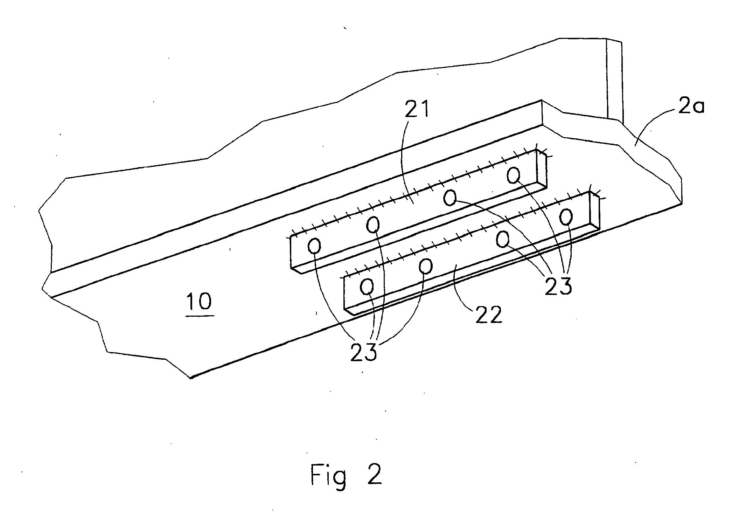

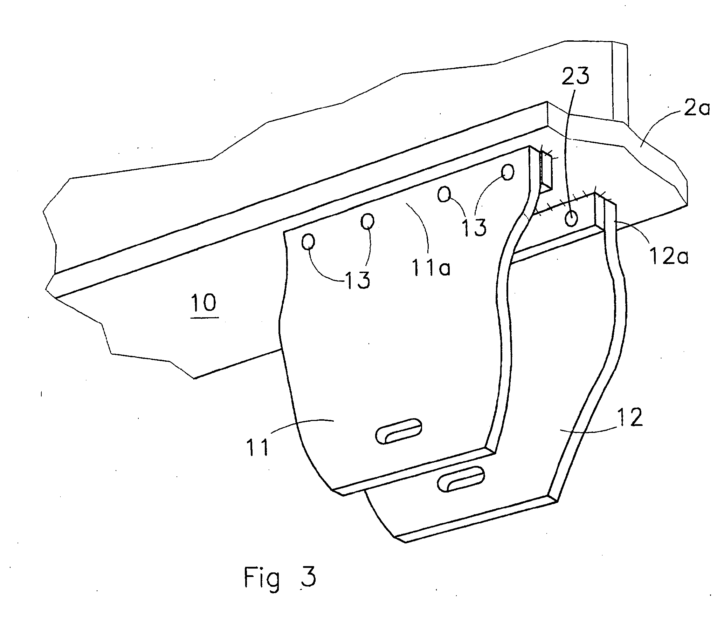

The way in which the bearing bracket 3 is secured to the chassis beam 2 will be explained in more detail with reference to Figs. 2 and 3. Fig. 2 shows a perspective view, from below, of the chassis beam 2. The bottom flange 2a has a downwardly facing horizontal surface 10. Two separate securing strips 21 and 22 are welded to the horizontal surface 10. It is also possible for two securing strips, which are connected to one another by means of a connecting piece, to be welded to the horizontal surface 10. In this context, consideration may be given, for example, to a strip which is bent into a U shape from a single piece, in which case the limbs of the U form the securing strips. The securing strips 21, 22 are provided with securing holes 23.

Fig. 3 shows how a bearing bracket comprising two separate side plates 11 and 12 bear, by means of respective securing regions 11a and 12a, against the securing strips 21 and 22, respectively. The securing regions 11a, 12a are provided with securing holes 13 (cf. also Fig. 1). The securing region 11a, 12a of the side plate 11, 12 is placed against the securing strip 21, 22 in such a manner that the securing holes 13 and the securing holes 23 are aligned with one another and a bolt can be fitted through them in order to connect the side plate and the securing strip to one another. The top edge of the side plates 11, 12 may bear completely or partially against the horizontal surface 10, but it is also possible for the side plates 11, 12 to be arranged in such a manner that the top edge is not in contact with the horizontal surface 10.

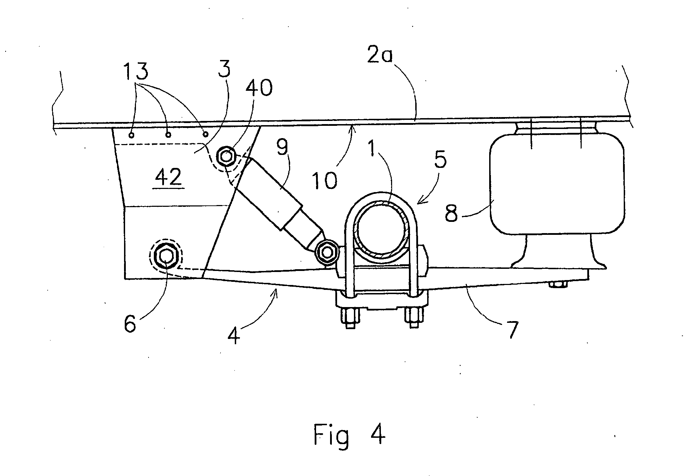

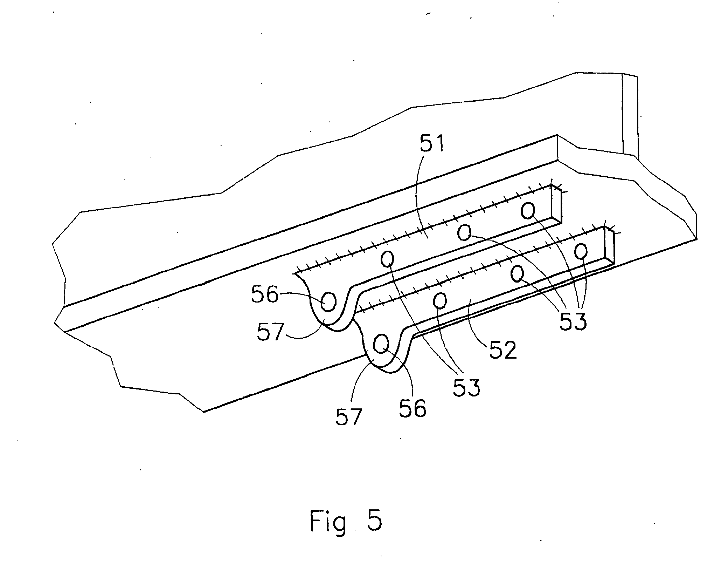

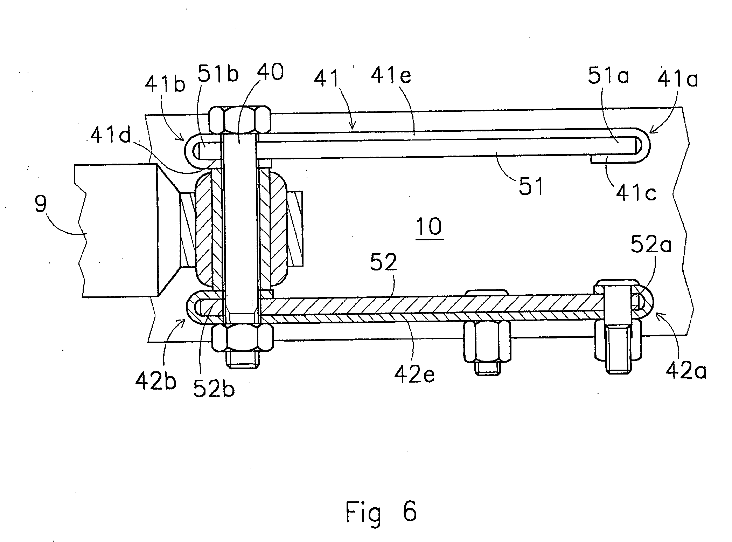

Fig. 4 shows another embodiment of the wheel axle suspension. The components which correspond to the wheel axle suspension shown in Fig. 1 are denoted by identical reference numerals. In this embodiment, there is a shock absorber 9 arranged between the carrier arm 4 and the bearing bracket 3. In this embodiment, the bearing bracket 3 also has two side plates 41, 42 (cf. Fig. 6), in which, in addition to the securing holes 13, there is also a securing hole for the bolt 40 which is used to secure the shock absorber 9 to the bearing bracket 3. In this embodiment too, the side plates 41 of the bearing bracket 3 are fitted onto securing strips, which in Fig. 5 are denoted by 51 and 52. The securing strips 51 and 52 have securing holes 53 which are similar to the securing holes 23 shown in Fig. 2. Lugs 57 which are higher than the remainder of the securing strips 51, 52 are arranged at one end of the securing strips 51, 52. In the lugs 57 there is a securing hole 56, through which the bolt 40 of the shock absorber 9 can be fitted.

Fig. 6 shows, partially in cross section, a bottom view of the embodiment shown in Fig. 4. Fig. 6 shows the securing strips 51 and 52 which are welded to the flange surface 10. The shock absorber 9 and the associated bolt 40 can also be seen.

The side plate 41 is bent around the two end edges 51a and 51b of the securing strip 51 at the end regions 41a and 41b. As a result, the side plate 41 has parts 41c and 41d which engage on an inner side of the securing strip 51 and another part 41e which engages on the other side of the securing strip 51. At the end regions 42a and 42b, the side plate 42 is bent around the two end edges 52a and 52b of the securing strip 52. As a result, the side plate 42 has parts 42c and 42d which engage on an inner side of the securing strip 52 and another part 42e which engages on the other side of the securing strip 52. Bending the side plates 41, 42 around the securing strips 51, 52 forms additional frictional surfaces in the clamping connection between the securing strips 51, 52 and the side plates 41, 42. This means that sufficiently strong securing is obtained with a limited number of bolts, making it possible to provide resistance to a moment of rotation which is caused by driving or braking forces acting on the bearing bracket 3.

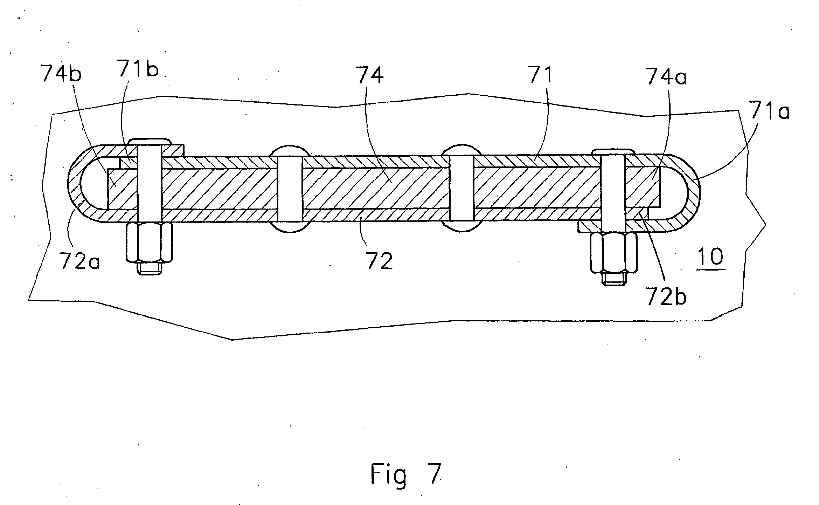

In another embodiment, a cross section through which at the level of the securing region is shown in Fig. 7, the bearing bracket 73 has two side plates 71 and 72. A single securing strip 74 is attached to the horizontal surface 10 of the chassis beam 2. The securing region of one side plate 71 bears against one side of the securing strip 74, and the securing region of the other side plate 72 bears against the other side of the securing strip 74.

One end region 71a of the side plate 71 is bent around an end edge 74a of the strip 74 and partially laid over the plate 72. An end region 72a of the side plate 72 is bent over in the same way. As a result, in the vicinity of the end edge 74a of the securing strip 74, an end region 72b of the side plate 72 is clamped between two parts of the side plate 71 and the securing strip 74. In the same way, in the vicinity of the other end edge 74b of the securing strip 74, an end region 71b of the side plate 71 is clamped between two parts of the side plate 72 and the securing strip 74. This form of clamping gives rise to additional frictional surfaces, so that it is possible to provide better resistance to a moment of rotation acting on the bearing bracket 73.

The above text has in each case described a bearing bracket with two separate side plates. It should be understood that the invention also relates to embodiments in which the bearing bracket has side plates which are connected to one another, for example by an intermediate plate. The protection is limited by the appended claims.

## Claims

1. Securing of a bearing bracket (3) of an axle assembly to a chassis of a vehicle, which bearing bracket (3) comprises two side plates (11, 12; 41, 42; 71, 72) which each have a securing region (11a, 12a, 41e, 42e) which is provided with holes (13) through which bolts or other securing means fit in order to secure the side plates (11, 12; 41, 42; 71, 72) to a chassis component (2) of the vehicle, wherein one or more securing strips (21, 22; 51, 52; 74) with ef-a top side are fixed to a horizontal surface (10) of the chassis component (2), and each side plate (11, 12; 41, 42; 71, 72) in each case being secured to a securing strip (21, 22; 51, 52; 74) in such a manner that the securing region (11a, 12a) of the side plate (11, 12; 41, 42; 71, 72) is in each case arranged against a side face of the securing strip (21, 22; 51, 52; 74).

2. Securing according to claim 1, **characterized in that** two separate securing strips (21, 22; 51, 52) or two securing strips which are connected to one another by means of a connecting piece are attached to the chassis component (2) in order in each case to be secured to one of the side plates (11, 12; 41, 42) of the bearing bracket (3).

3. Securing according to claim 1 or 2, **characterized in that** the securing region of each side plate (41, 42) has a part (41c, 41d) which engages on one side of the securing strip (51, 52) and another part (41 e, 42e) which engages on the other side of the securing strip (51, 52).

4. Securing according to claim 3, **characterized in that** the side plate (41, 42) has a bent-over part (41 a, 41 b, 42a, 42b) which is bent around an end edge (51a, 51 b, 52a, 52b) of the securing strip (51, 52).

5. Securing according to claim 3 or 4, **characterized in that** the side plate (41, 42) has two bent-over parts (41 a, 41 b, 42a, 42b), which are respectively bent around two end edges (51 a, 51 b, 52a, 52b) of the securing strip (51, 52).

6. Securing according to one of the preceding claims, **characterized in that** in the securing strip (21, 22; 51, 52; 74) there are cutouts (23; 53) which correspond to the holes (13) in the side plates (11, 12; 41, 42; 71, 72).

7. Securing according to one of the preceding claims, **characterized in that** the securing strip (21, 22; 51, 52; 74) is welded to the horizontal surface (10) of the chassis component.

8. Securing according to one of the preceding claims, **characterized in that** in the securing strip (51, 52) there is a securing hole (56) for securing a shock absorber (9).

## Patentansprüche

1. Befestigen einer Halterung (3) an einer Achsenanordnung an einem Fahrgestell eines Fahrzeugs, wobei die Halterung (3) zwei Seitenplatten (11, 12; 41, 42; 71, 72) umfasst, welche jeweils einen Befestigungsbereich (11a, 12a, 41 e, 42e) aufweisen, welcher mit Löchern (13) versehen ist, durch welche Bolzen oder andere Befestigungsmittel passen, um die Seitenplatten (11, 12; 41, 42; 71, 72) an einer Fahrgestellkomponente (2) des Fahrzeugs zu befestigen, wobei ein oder mehrere Befestigungsstreifen (21, 22; 51, 52; 74) mit einer oberen Seite an einer horizontalen Oberfläche (10) der Fahrgestellkomponente (2) befestigt sind, und wobei jede Seitenplatte (11, 12; 41, 42; 71, 72) in jedem Fall an einem Befestigungsstreifen (21, 22; 51, 52; 74) derart befestigt ist, dass der Befestigungsbereich (11a, 12a) der Seitenplatte (11, 12; 41, 42; 71, 72) in jedem Fall gegen eine Seitenfläche des Befestigungsstreifens (21, 22; 51, 52; 74) angeordnet ist.

2. Befestigen nach Anspruch 1, **dadurch gekennzeichnet, dass** zwei getrennte Befestigungsstreifen (21, 22; 51, 52) oder zwei Befestigungsstreifen, welche mittels eines Verbindungsstücks miteinander verbunden sind, an der Fahrgestellkomponente (2) angebracht sind, um in jedem Fall mit einer der Seitenplatten (11, 12; 41, 42) der Halterung (3) befestigt zu sein.

3. Befestigen nach Anspruch 1 oder 2, **dadurch gekennzeichnet, dass** der Befestigungsbereich jeder Seitenplatte (41, 42) ein Teil (41 c, 41 d), welches sich auf einer Seite des Befestigungsstreifens (51, 52) in Eingriff befindet, und ein anderes Teil (41 e, 42e), welches sich auf der anderen Seite des Befestigungsstreifens (51, 52) in Eingriff befindet, aufweist.

4. Befestigen nach Anspruch 3, **dadurch gekennzeichnet, dass** die Seitenplatte (41, 42) ein übergebogenes Teil (41 a, 41 b, 42a, 42b) aufweist, welches um eine Endkante (51 a, 51 b, 52a, 52b) des Befestigungsstreifens (51, 52) herumgebogen ist.

5. Befestigen nach Anspruch 3 oder 4, **dadurch gekennzeichnet, dass** die Seitenplatte (41, 42) zwei übergebogene Teile (41 a, 41 b, 42a, 42b) aufweist, welche entsprechend um zwei Endkanten (51 a, 51 b, 52a, 52b) des Befestigungsstreifens (51, 52) herumgebogen sind.

6. Befestigen nach einem der vorhergehenden Ansprüche, **dadurch gekennzeichnet, dass** in dem Befestigungsstreifen (21, 22; 51, 52; 74) Ausschnitte (23; 53) vorhanden sind, welche mit den Löchern (13) in den Seitenplatten (11, 12; 41, 42; 71, 72) korrespondieren.

7. Befestigen nach einem der vorhergehenden Ansprüche, **dadurch gekennzeichnet, dass** der Befestigungsstreifen (21, 22; 51, 52; 74) an die horizontale Oberfläche (10) der Fahrzeugkomponente geschweißt ist.

8. Befestigen nach einem der vorhergehenden Ansprüche, **dadurch gekennzeichnet, dass** in dem Befestigungsstreifen (51, 52) ein Befestigungsloch (56) vorhanden ist, um einen Stoßdämpfer (9) zu befestigen.

## Revendications

1. Fixation d'un support de palier (3) d'un ensemble d'essieu sur un châssis d'un véhicule, lequel support de palier (3) comprend deux plaques latérales (11, 12 ; 41, 42 ; 71, 72) qui ont chacune une région de fixation (11a, 12a, 41e, 42e) qui est dotée de trous (13) à travers lesquels des boulons ou d'autres moyens de fixation s'adaptent afin de fixer les plaques latérales (11, 12 ; 41, 42 ; 71, 72) sur un composant de châssis (2) du véhicule, dans laquelle une ou plusieurs bandes de fixation (21, 22 ; 51, 52 ; 74) avec un côté supérieur sont fixées sur une surface horizontale (10) du composant de châssis (2), et chaque plaque latérale (11, 12 ; 41, 42 ; 71, 72) dans chaque cas étant fixée sur une bande de fixation (21, 22 ; 51, 52 ; 74) de sorte que la région de fixation (11a, 12a) de la plaque latérale (11, 12 ; 41, 42 ; 71, 72) est dans chaque cas agencée contre une face latérale de la bande de fixation (21, 22 ; 51, 52 ; 74).

2. Fixation selon la revendication 1, **caractérisée en ce que** deux bandes de fixation séparées (21, 22 ; 51, 52) ou deux bandes de fixation qui sont raccordées entre elles au moyen d'une pièce de raccordement sont fixées sur le composant de châssis (2) afin d'être fixées dans chaque cas à l'une des plaques latérales (11, 12 ; 41, 42) du support de palier (3).

3. Fixation selon la revendication 1 ou 2, **caractérisée en ce que** la région de fixation de chaque plaque latérale (41, 42) a une partie (41c, 41d) qui se met en prise sur un côté de la bande de fixation (51, 52) et une autre partie (41e, 42e) qui se met en prise de l'autre côté de la bande de fixation (51, 52).

4. Fixation selon la revendication 3, **caractérisée en ce que** la plaque latérale (41, 42) a une partie repliée (41a, 41b, 42a, 42b) qui est pliée autour d'un bord d'extrémité (51a, 51b, 52a, 52b) de la bande de fixation (51, 52).

5. Fixation selon la revendication 3 ou 4, **caractérisée en ce que** la plaque latérale (41, 42) a deux parties repliées (41a, 41b, 42a, 42b) qui sont respectivement pliées autour de deux bords d'extrémité (51a, 51b, 52a, 52b) de la bande de fixation (51, 52).

6. Fixation selon l'une quelconque des revendications précédentes, **caractérisée en ce que**, dans la bande de fixation (21, 22 ; 51, 52 ; 74), on trouve des découpes (23 ; 53) qui correspondent aux trous (13) dans les plaques latérales (11, 12 ; 41, 42 ; 71, 72).

7. Fixation selon l'une quelconque des revendications précédentes, **caractérisée en ce que** la bande de fixation (21, 22 ; 51, 52 ; 74) est soudée sur la surface horizontale (10) du composant de châssis.

8. Fixation selon l'une quelconque des revendications précédentes, **caractérisée en ce que** dans la bande de fixation (51, 52), on trouve un trou de fixation (56) pour fixer un amortisseur (9).
